# EUROPÄISCHE PATENTSCHRIFT

(11) **EP 3 571 088 B1**
(45) Veröffentlichungstag und Bekanntmachung des Hinweises auf die Patenterteilung: **10.03.2021**
(21) Anmeldenummer: 18700750.5
(22) Anmeldetag: 16.01.2018
(51) Int. Cl.: B60L 3/04, B60L 53/16, B60L 53/30, B60L 58/10

(54) **BATTERIESYSTEM, LADESYSTEM UND VERFAHREN ZUR AUFLADUNG FÜR EIN FAHRZEUG**
BATTERY SYSTEM, CHARGING SYSTEM AND METHOD FOR CHARGING A VEHICLE
SYSTÈME DE BATTERIE, SYSTÈME DE CHARGE ET PROCÉDÉ DE RECHARGE POUR VÉHICULE

(30) Priorität: 17.01.2017 DE 102017100771
(43) Veröffentlichungstag der Anmeldung: 27.11.2019
(73) Patentinhaber: INTILION GmbH, 08056 Zwickau (DE)
(72) Erfinder: WINKLER, Norman, 08056 Zwickau (DE); REINHOLD, Stefan, 08058 Zwickau (DE); NAWRATH, Thomas, 08056 Zwickau (DE)
(74) Vertreter: Patentanwälte Bals & Vogel
(86) Internationale Anmeldenummer: PCT/EP2018/051026
(87) Internationale Veröffentlichungsnummer: WO 2018/134208

(56) Entgegenhaltungen:
- EP-A1- 2 371 610
- EP-A1- 2 799 275
- DE-A1- 3 151 287
- DE-A1-102007 028 386
- DE-A1-102010 029 833

## Beschreibung

Die vorliegende Erfindung betrifft ein Batteriesystem für ein Fahrzeug gemäß der im Oberbegriff des Anspruchs 1 näher definierten Art. Ferner bezieht sich die Erfindung auf ein Ladesystem sowie ein Verfahren zur Aufladung für ein Fahrzeug.

Gattungsgemäße Batteriesysteme und Ladesysteme für Fahrzeuge sind bspw. aus DE3151287, EP2799275, DE102007028386 und DE102010029833 bekannt.

Aus dem Stand der Technik ist es bekannt, dass Fahrzeuge, insbesondere Flurförderzeuge, elektrisch betrieben und/oder angetrieben werden. Zur Energieversorgung einer Fahrzeugkomponente, bspw. eines Elektromotors, kommen dabei wiederaufladbare Batterien als Energiequelle zum Einsatz. Die wiederaufladbare Batterie (Akkumulator) des Fahrzeuges ist dabei bspw. als Lithiumbatterie (insbesondere Lithium-Ionen-Batterie) ausgeführt, um auch bei kurzzeitigen Zwischenladungen einen langen Betrieb des Fahrzeuges ermöglichen zu können. Bereits kurze Zwischenladungen können dabei oft den Betrieb (d. h. die Nutzungsdauer) des Fahrzeuges um Stunden verlängern.

Aus diesem Grunde werden in der Praxis Zwischenladungen der Batterie immer populärer, um bspw. das Fahrzeug kurzfristig in Betrieb nehmen zu können und die Nutzungsdauer zu verlängern. Daher ist es oft gewünscht, dass eine Kontaktierung des Fahrzeuges bzw. der Batterie an ein Ladegerät einfach und/oder schnell und/oder ergonomisch gestaltet wird. Herkömmlicherweise wird hierzu die Batterie über dieselben Verbindungspunkte sowohl mit dem Fahrzeug (bspw. dem Fahrzeugbordnetz) als auch mit dem Ladegerät verbunden.

Dabei kann es möglich sein, dass sowohl das Fahrzeug (d. h. ein Fahrzeugbordnetz bzw. die Fahrzeugkomponente) als auch ein Ladestecker des Ladegeräts mit der Batterie kontaktiert. Entsprechend kann das Fahrzeug während des Ladevorgangs betriebsbereit sein, da die Energieversorgung durch die Batterie aufrecht erhalten bleibt. Hierbei muss allerdings vermieden werden, dass bei einer unachtsamen Handhabung, bspw. bei einem Losfahren mit dem Fahrzeug, das noch kontaktierte Ladegerät und/oder das Fahrzeug beschädigt wird.

Um dies zu verhindern, müssen technisch aufwendige und komplexe Maßnahmen getroffen werden. So kann bspw. vorgesehen sein, dass zunächst die Verbindung der Batterie zur Fahrzeugkomponente (bzw. Fahrzeugbordnetz) getrennt wird und erst im Anschluss daran das Ladegerät zum Aufladen kontaktiert wird. Dies ist allerdings wenig ergonomisch und zeitaufwendig. Die Dauer für eine Zwischenladung wird damit drastisch erhöht.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine sicherere und/oder schnellere und/oder ergonomischere Möglichkeit zur Aufladung der Batterie bereitzustellen.

Die voranstehende Aufgabe wird gelöst durch ein Batteriesystem mit den Merkmalen des Anspruchs 1, ein Ladesystem mit den Merkmalen des Anspruchs 9 sowie durch ein Verfahren mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Batteriesystem beschrieben sind, selbstverständlich auch im Zusammenhang mit dem erfindungsgemäßen Ladesystem sowie dem erfindungsgemäßen Verfahren, und jeweils umgekehrt, so dass bzgl. der Offenbarung zu den einzelnen Erfindungsaspekten stets wechselseitig Bezug genommen wird bzw. werden kann.

Die Aufgabe wird insbesondere gelöst durch ein Batteriesystem für ein Fahrzeug, vorzugsweise für ein Flurförderzeug, aufweisend:
- wenigstens eine wiederaufladbare Batterie, insbesondere Lithium-Ionen Batterie, zur Energieversorgung wenigstens einer Fahrzeugkomponente des Fahrzeuges,
- wenigstens zwei (elektrische und/oder elektronische) Schaltelemente jeweils zur Herstellung und/oder Unterbrechung einer elektrischen Verbindung der Batterie mit der Fahrzeugkomponente, insbesondere zur Herstellung und/oder Unterbrechung der Energieversorgung der Fahrzeugkomponente.

Hierbei ist erfindungsgemäß vorgesehen, dass ein Ladeverbindungspunkt vorgesehen ist, welcher elektrisch unabhängig von den (elektronischen) Schaltelementen elektrisch (ggf. fest und/oder unlösbar) mit der Batterie verbunden ist, und zur (ggf. lösbaren) elektrischen Verbindung mit einer (externen) Ladevorrichtung ausgeführt ist, sodass eine Aufladung der Batterie durch die Ladevorrichtung unabhängig von einem Schaltzustand und/oder bei einem ausgeschalteten Schaltzustand wenigstens (oder genau) eines der (elektronischen) Schaltelemente durchführbar ist. Damit wird der Vorteil erzielt, dass auch bei einer Aufladung die Energieversorgung zu der Fahrzeugkomponente unterbrochen werden kann.

Bevorzugt ist dabei die Ladevorrichtung als eine externe Ladevorrichtung ausgeführt, d. h. außerhalb des Batteriesystems und/oder des Fahrzeuges vorgesehen. Insbesondere bezieht sich dabei ein ausgeschalteter Schaltzustand auf einen gesperrten bzw. geöffneten Schaltzustand zum Sperren eines Stromflusses zumindest in eine Stromrichtung durch das entsprechende Schaltelement, wohingegen insbesondere ein eingeschalteter Schaltzustand sich auf einen freigegebenen bzw. geschlossenen Schaltzustand bezieht zur Freigabe des Stromflusses bezieht.

Vorzugsweise dient dabei der ausgeschaltete Schaltzustand der Schaltelemente dazu, die jeweilige elektrische Verbindung zu unterbrechen, insbesondere einen elektrischen Stromfluss durch die jeweilige Verbindung zumindest überwiegend zu reduzieren, sodass die vollständige Energieversorgung der Fahrzeugkomponente unterbrochen werden kann. Die Energieversorgung wird dabei insbesondere dadurch unterbrochen, dass eine Energieübertragung über die Verbindung gesperrt wird.

Erfindungsgemäß ergibt sich ein Vorteil dadurch, dass der Ladeverbindungspunkt elektrisch unabhängig von den (elektronischen) Schaltelementen elektrisch mit der Batterie verbunden ist. Dies ermöglicht es, dass wenigstens einer der elektronischen Schaltelemente für das Aufladen in einen ausgeschalteten (d. h. geöffneten und/oder gesperrten) Schaltzustand überführt werden kann (d. h. in einen Sperrzustand gebracht wird), sodass eine elektrische Verbindung der Fahrzeugkomponente mit der Batterie durch das Schaltelement gesperrt wird. Damit wird verhindert, dass eine Energieübertragung von der Batterie zur Fahrzeugkomponente vollständig erfolgt, und das Fahrzeug kann somit nicht fortbewegt bzw. betrieben werden. Mit anderen Worten kann trotz des angesteckten Ladegeräts (d. h. bspw. der Ladevorrichtung bzw. des Ladesteckers) und/oder trotz des Ladevorgangs die Energiezufuhr bzw. Energieversorgung zur Fahrzeugkomponente (d. h. zum Fahrzeug) unterbunden werden. Auf diese Weise kann ein effizienter Wegfahrschutz bereitgestellt werden. Dieser kann zudem technisch einfach und kostengünstig realisiert werden, da insbesondere keine weiteren Anpassungen am Fahrzeug notwendig sind. Insbesondere kann der Wegfahrschutz ausschließlich durch das Batteriesystem bereitgestellt sein.

Erfindungsgemäß ist vorgesehen, dass wenigstens (oder genau) ein erstes und zweites (elektronisches) Schaltelement vorgesehen sind, wobei
- das erste (elektronische) Schaltelement in einen ersten Strompfad integriert ist, und in einen eingeschalteten ersten Schaltzustand bringbar ist, sodass eine erste elektrische Verbindung der Batterie mit der Fahrzeugkomponente und mit der Ladevorrichtung im ersten Strompfad herstellbar ist,
- das zweite (elektronische) Schaltelement in einen zweiten Strompfad integriert ist, und in einen eingeschalteten zweiten Schaltzustand bringbar ist, sodass eine zweite elektrische Verbindung der Batterie mit der Fahrzeugkomponente im zweiten Strompfad herstellbar ist,
wobei der Ladeverbindungspunkt zur elektrischen Verbindung der Batterie mit der Ladevorrichtung unabhängig von dem zweiten Schaltzustand des zweiten elektronischen Schaltelements ausgeführt ist. Somit ist über den Ladeverbindungspunkt ggf. eine zweite elektrische Verbindung der Batterie mit der Ladevorrichtung möglich, wobei insbesondere zum Aufladen über die Ladevorrichtung zwei elektrische Verbindungen aktiv sein müssen (die erste und zweite elektrische Verbindung) und/oder zum Betreiben der Fahrzeugkomponente ebenfalls zwei elektrische Verbindungen (über den ersten und zweiten Strompfad) aktiv sein müssen. Dies hat den Vorteil, dass eine sicherere Möglichkeit zur Aufladung bereitgestellt werden kann, indem die Fortbewegung des Fahrzeuges unterbunden werden kann.

Es kann dabei insbesondere möglich sein, dass die Aufladung der Batterie durch die Ladevorrichtung bei einem ausgeschalteten Schaltzustand (und/oder unabhängig von einem Schaltzustand) wenigstens oder genau eines der elektronischen Schaltelemente, insbesondere des zweiten elektronischen Schaltelements, durchführbar ist und/oder durchgeführt wird. Erfindungsgemäß umfasst dabei das Batteriesystem ein erstes elektronisches Schaltelement in einem ersten Strompfad (ggf. Pluszweig der Batterie) und ein zweites elektronisches Schaltelement in einem zweiten Strompfad (ggf. Minuszweig der Batterie). Vorzugsweise sind dabei die beiden Schaltelemente (bezogen auf die zu sperrende Stromrichtung) antiparallel in die Strompfade integriert, sodass insbesondere zwei unterschiedliche Stromrichtungen durch die Schaltelemente gesperrt werden können (z. B. von der Batterie in Richtung Fahrzeugkomponente und umgekehrt). Insbesondere kann zur Kontaktierung der Batterie mit dem Fahrzeug (d. h. mit der Fahrzeugkomponente) ein zweiter Verbindungspunkt und ein dritter Verbindungspunkt dienen. Der dritte Verbindungspunkt ist dabei bspw. mit dem ersten elektronischen Schaltelement und der zweite Verbindungspunkt mit dem zweiten elektronischen Schaltelement (ggf. direkt bzw. unmittelbar) verbunden.

Grundsätzlich könnten dabei der zweite und dritte Verbindungspunkt auch zur Verbindung mit dem Ladegerät dienen. Dies hat allerdings den Nachteil, dass dann zum Aufladen beide Schaltelemente geschlossen bleiben müssen, sodass auch die Fahrzeugkomponente weiter mit Energie durch die Batterie versorgt wird. Erfindungsgemäß ist daher ein erster Verbindungspunkt (Ladeverbindungspunkt) vorgesehen, welcher unabhängig von dem (ersten oder zweiten) Schaltzustand des (ersten oder zweiten) elektronischen Schaltelements elektrisch mit der Batterie verbunden ist. Dies ermöglicht es, dass bspw. durch das Umschalten des zweiten elektronischen Schaltelements in den ausgeschalteten (zweiten) Schaltzustand die Energieübertragung der Batterie zur Fahrzeugkomponente gesperrt werden kann, und dennoch das Ladegerät über den ersten Verbindungspunkt mit der Batterie zum Aufladen verbunden werden kann. Am ersten Verbindungspunkt kann entsprechend ein Abgriff und/oder Kontakt zum Verbinden mit dem Ladegerät (bzw. dem Ladestecker) vorgesehen sein und/oder konstruktiv bereitgestellt werden. Insbesondere wird dieser Abgriff bzw. der erste Verbindungspunkt ausschließlich zur Kontaktierung mit dem Ladegerät verwendet. Insbesondere wird dabei der Umstand genutzt, dass die jeweiligen Schaltelemente als Halbleiter(schalter) nur in eine Stromrichtung den Stromfluss sperren. Bevorzugt ist dabei der erste Verbindungspunkt direkt mit der Masse (wenigstens) einer der Batteriezellen der Batterie verbunden.

Insbesondere können die Verbindungspunkte (insbesondere auch der Ladeverbindungspunkt) dabei Positionen und/oder (bspw. gleiche bzw. gemeinsame) elektrische Potentiale an/bei einem elektrischen Leiter betreffen, und bevorzugt auch elektrische Anschlüsse oder dergleichen am Leiter umfassen. Allerdings muss der Verbindungspunkt nicht zwangsläufig ein Element sein, welches sich konstruktiv vom übrigen Leiter hervorhebt. Somit kann wenigstens einer der Verbindungspunkte (im weiteren Sinne) sich auch lediglich auf eine Positionsangabe im Schaltkreis beziehen. Im engeren Sinne weist wenigstens einer der Verbindungspunkte dagegen bereits Anpassungen auf, welche eine Kontaktierung ermöglichen, wie ein Kopplungselement (bspw. einen Steckverbinder oder eine Aufnahme für einen Steckverbinder oder dergleichen).

Insbesondere müssen zur Bereitstellung der Energieversorgung von der Batterie an die Fahrzeugkomponente nach dem Aufladen wieder beide Schaltelemente derart (in einen eingeschalteten bzw. geschlossenen Schaltzustand) angesteuert werden, dass beide Schaltelemente den Stromfluss ermöglichen. Auch kann es möglich sein, dass im Normalbetrieb das Batteriemanagementsystem die jeweiligen Schaltelemente unterschiedlich ansteuert, bspw. auch im ausgeschalteten Schaltzustand, um diverse Managementfunktionen durchzuführen. Eine solche Managementfunktion ist bspw. eine Stromflusssteuerung. Um zuverlässig und vollständig beide Stromflussrichtungen zu sperren, müssen dabei bspw. beide antiparallel geschaltete Schaltelemente in den ausgeschalteten Schaltzustand überführt werden.

Es ist weiter denkbar, dass beim Kontaktieren des Ladesteckers bzw. des Ladegeräts, insbesondere durch wenigstens eine Umschaltkomponente, wenigstens ein (elektrisches) Signal erzeugt wird, welches ein Umschalten des zweiten elektronischen Schaltelements in den ausgeschalteten (zweiten) Schaltzustand bewirkt (und damit ein Sperren des Stromflusses in zumindest eine Stromrichtung durch das zweite elektronische Schaltelement). Damit kann die Fahrzeugkomponente nicht mehr durch die Batterie (ausreichend) mit Energie versorgt werden, sodass ein Losfahren zuverlässig verhindert wird.

Insbesondere ist die Umschaltkomponente als eine passive und/oder elektromechanische Komponente, insbesondere Elektronikkomponente, ausgeführt. Bspw. ist die Umschaltkomponente als Hilfskontakt ausgeführt, welcher beim Kontaktieren des Ladesteckers ein elektrisches Steuersignal an das Batteriemanagementsystem sendet und/oder dieses bewirkt. So kann es bspw. vorgesehen sein, dass der Hilfskontakt beim Kontaktieren zwei Signalleitungen brückt, um das Steuersignal zu erzeugen. Das Steuersignal kann dann bspw. von einer (ggf. passiven) Schaltung (bspw. des Batteriemanagementsystems) ausgelesen werden, woraufhin bei positiver Detektion des Steuersignals das zweite elektronische Schaltelement zwangsweise in einen ausgeschalteten (zweiten) Schaltzustand überführt werden kann. Insbesondere kann dabei die Schaltung des Batteriesystems derart ausgelegt sein, dass das Steuersignal durch andere Komponenten nicht übersteuert werden kann.

Bevorzugt ist die Umschaltkomponente elektrisch leitfähig und/oder flächenförmig und/oder stiftförmig ausgeführt, und insbesondere fest mit dem Ladestecker verbunden. Bevorzugt kontaktiert dabei beim Kontaktieren des Ladesteckers die Umschaltkomponente einen entsprechenden Gegenkontakt des Batteriesystems.

Vorzugsweise ist dabei die Fahrzeugkomponente als ein Bordnetz oder ein Antrieb oder Teil eines Antriebs oder als ein Elektromotor oder dergleichen des Fahrzeuges ausgeführt. Insbesondere dient die Fahrzeugkomponente zum Antrieb, d. h. zur Fortbewegung, des Fahrzeuges. Mit anderen Worten kann es möglich sein, dass durch eine Energieversorgung der Fahrzeugkomponente bzw. durch ein Bereitstellen von Energie von der Batterie für die Fahrzeugkomponente eine Fortbewegung des Fahrzeuges ermöglicht wird. Dabei hat eine Unterbrechung dieser Energieversorgung bei einem Ladevorgang den Vorteil, dass die Fortbewegung verhindert wird und somit die Gefahr für eine Beschädigung der Ladevorrichtung reduzierbar ist.

Insbesondere ist dabei das Fahrzeug als ein Elektrofahrzeug und/oder als ein Flurförderzeug (Flurfördergerät) und/oder als ein Kraftfahrzeug ausgeführt. Bspw. ist das Flurförderzeug als ein Fördermittel ausgeführt, das seiner Bauart nach mit Rädern auf Flur laufen und frei lenkbar und/oder zum Befördern, Ziehen und/oder Schieben von Lasten eingerichtet und/oder zur innerbetrieblichen Verwendung bestimmt ist. Weiter ist es denkbar, dass das Flurförderzeug zum Heben, Stapeln und/oder In-Regale-Einlagern von Lasten ausgeführt ist und/oder Lasten selbst aufnehmen und absetzen kann. Es kann sich dabei bspw. um ein Elektro-Geh-Gerät oder Elektro-Stand-Gerät oder Elektro-Fahrersitz-Gerät handeln.

Erfindungsgemäß umfasst das Batteriesystem wenigstens eine wiederaufladbare Batterie, welche (jeweils) eine oder mehrere Batteriezellen (insbesondere galvanische Zellen) aufweist. Bspw. können die Batteriezellen, ggf. als Batteriemodul oder Zellstack oder dergleichen, miteinander verbunden und/oder zusammengefasst sein. Des Weiteren kann es vorgesehen sein, dass das Batteriesystem wenigstens ein Batteriemanagementsystem umfasst, das bspw. mit der Batterie (und/oder einem oder mehreren Batteriezellen und/oder Batteriemodulen und/oder Zellstacks) elektrisch verbunden oder dieser zugeordnet ist. Insbesondere dient dabei das Batteriemanagementsystem zur Steuerung und/oder Überwachung eines Entladevorgangs der Batterie (bzw. der Batteriezellen) und/oder zur Steuerung und/oder Überwachung eines Ladevorgangs der Batterie, d. h. zur Aufladung bei dem Batteriesystem, insbesondere der Batteriezellen der Batterie. Hierzu kann das Batteriemanagementsystem bspw. das erste elektronische Schaltelement und/oder das zweite elektronische Schaltelement ansteuern, insbesondere über einen Steuerungspfad des jeweiligen Schaltelements. Somit kann das Batteriemanagementsystem elektrisch mit den jeweiligen Schaltelementen verbunden sein.

Erfindungsgemäß dient dabei die Batterie zur Energieversorgung der wenigstens einen Fahrzeugkomponente des Fahrzeuges, d. h. zum Betreiben der Fahrzeugkomponente, bspw. zum Antreiben bzw. Fortbewegen des Fahrzeuges. Bspw. kann die Batterie dazu mit einem Bordnetz des Fahrzeuges elektrisch verbunden sein. Insbesondere liefert dabei die Batterie eine elektrische Spannung und/oder liegt an der Fahrzeugkomponente eine elektrische Spannung an im Bereich von 10 V bis 100 V, vorzugsweise 20 V bis 80 V, bevorzugt 40 V bis 60 V.

Bevorzugt ist die wiederaufladbare Batterie als eine Lithiumbatterie (insbesondere Lithium-Ionen-Batterie) ausgeführt. Eine solche Lithiumbatterie bietet dabei den Vorteil, mit hoher Laderate wieder aufgeladen werden zu können. So kann die Batterie bspw. innerhalb maximal einer Stunde vollständig aufgeladen werden, und/oder es können Zwischenladungen mit einer Dauer von höchstens einigen Minuten durchgeführt werden um die Nutzungsdauer um Stunden zu verlängern. Insbesondere bei der Verwendung mit Flurförderzeugen kann somit der Vorteil erzielt werden, dass sogenannte Zwischenlagerungen durchgeführt werden, um das Flurförderzeug kurzfristig betreiben zu können.

Nach einer weiteren Möglichkeit kann vorgesehen sein, dass ein, insbesondere zweiter, Steuerungspfad, insbesondere eines Batteriemanagementsystems, elektrisch mit wenigstens einem der elektronischen Schaltelemente (insbesondere mit dem zweiten elektronischen Schaltelement) verbunden ist, sodass bei der Verbindung mit der Ladevorrichtung das wenigstens eine der elektronischen Schaltelemente über den Steuerungspfad in einen ausgeschalteten (zweiten) Schaltzustand bringbar ist, um insbesondere die (zweite) elektrische Verbindung der Batterie mit der Fahrzeugkomponente zumindest teilweise zu unterbrechen. Dies ermöglicht eine automatische Unterbindung der Energieversorgung der Batterie zur Fahrzeugkomponente, sodass bereits beim Kontaktieren des Ladegeräts (d. h. der Ladevorrichtung) eine Wegfahrsperre bereitgestellt werden kann. Dadurch kann die Sicherheit beim Aufladen weiter erhöht werden.

Insbesondere wird dabei in Bezug auf die elektronischen Schaltelemente unter einer (ggf. zumindest teilweisen oder vollständigen) Unterbrechung einer elektrischen Verbindung und/oder eines Stromflusses auch ein Sperren des Stromflusses verstanden, bei der nur noch ein sehr geringer Stromfluss erfolgt (wie dies im Sperrzustand bei Halterleiterschaltern technisch unvermeidbar ist). Mit anderen Worten wird im ausgeschalteten Schaltzustand der Stromfluss überwiegend reduziert, sodass effektiv keine Energieversorgung zum Betrieb der Fahrzeugkomponente möglich ist.

Bevorzugt kann im Rahmen der Erfindung vorgesehen sein, dass der erste Strompfad als positiver Strompfad ausgeführt ist, welcher elektrisch mit einem Pluspol der Batterie verbunden ist, und der zweite Strompfad als negativer Strompfad ausgeführt ist, welcher elektrisch mit einem Minuspol der Batterie verbunden ist. Insbesondere ist dabei der erste Verbindungspunkt direkt und/oder unmittelbar mit dem Minuspol der Batterie (d. h. insbesondere mit wenigstens einer Masse wenigstens einer Batteriezelle) elektrisch verbunden. Somit kann die Aufladung zuverlässig und sicher erfolgen.

Optional kann es vorgesehen sein, dass ein Batteriemanagementsystem vorgesehen ist, welches elektrisch mit den Schaltelementen über jeweilige Steuerungspfade verbunden ist, sodass vorzugsweise
- für einen Aufladevorgang ein erstes elektronisches Schaltelement in einen eingeschalteten ersten Schaltzustand und ein zweites elektronisches Schaltelement in einen ausgeschalteten zweiten Schaltzustand bringbar ist, und/oder
- für eine vollständig bereitgestellte Energieversorgung zur Fahrzeugkomponente das erste elektronische Schaltelement in einen eingeschalteten ersten Schaltzustand und das zweite elektronische Schaltelement in einen eingeschalteten zweiten Schaltzustand bringbar ist, und/oder
- für eine vollständige Unterbrechung und/oder beidpolig unterbrochene Energieversorgung zur Fahrzeugkomponente das erste elektronische Schaltelement in einen ausgeschalteten ersten Schaltzustand und das zweite elektronische Schaltelement in einen ausgeschalteten zweiten Schaltzustand bringbar ist, sodass vorzugsweise sowohl die Energieversorgung als auch eine Aufladung verhindert ist.

Dabei kann es auch möglich sein, dass es neben der vollständig bereitgestellten bzw. vollständig unterbrochenen Energieversorgung noch weitere Energieversorgungszustände gibt, welche sich durch unterschiedliche Schaltzustände der Schaltelemente ergeben. Diese können bspw. durch das Batteriemanagementsystem gesteuert werden, um verschiedene Managementfunktionen für das Batteriesystem bereitzustellen (bspw. eine Stromflusskontrolle und dergleichen). Damit ist ein flexibler und anpassbarer Betrieb des Batteriesystems möglich.

Vorteilhaft ist es darüber hinaus, wenn im Rahmen der Erfindung eines der elektronischen Schaltelemente und der Ladeverbindungspunkt (erste Verbindungspunkt) jeweils direkt mit der Batterie, insbesondere mit einem Minuspol der Batterie, elektrisch verbunden sind. Damit kann über den Ladeverbindungspunkt unabhängig vom Schaltelement eine elektrische Verbindung mit der Batterie hergestellt werden, um so den Aufladevorgang sicherer und zuverlässiger durchzuführen.

Gemäß einer vorteilhaften Weiterbildung der Erfindung kann vorgesehen sein, dass die elektronischen Schaltelemente antiparallel zueinander (d. h. insbesondere in unterschiedlichen Stromrichtungen sperrend bzw. in Bezug auf die Sperrrichtung gegenläufig) in einem Schaltkreis zur Energieversorgung der Fahrzeugkomponente integriert sind, wobei vorzugsweise die elektronischen Schaltelemente jeweils als Halbleiterschalter, vorzugsweise als Leistungs-Halbleiterschalter, insbesondere als Feldeffekttransistor, ausgeführt sind. Damit ergeben sich eine Vielzahl an möglichen Managementfunktionen, welche den Stromfluss bei dem Batteriesystem modifizieren können. Alternativ oder zusätzlich kann vorgesehen sein, dass die elektronischen Schaltelemente dazu ausgeführt sind, im jeweils ausgeschalteten (d. h. gesperrten) Schaltzustand jeweils nur in einer Stromrichtung einen Stromfluss (der Batterie bzw. Energieversorgung) zu sperren.

Es kann von Vorteil sein, wenn im Rahmen der Erfindung das Batteriesystem zur Energieversorgung der Fahrzeugkomponente als elektrische Antriebskomponente, insbesondere als Elektromotor, des Fahrzeuges ausgeführt ist. Damit dient die Fahrzeugkomponente zur Fortbewegung des Fahrzeuges. Insbesondere ist es zum Betrieb der Fahrzeugkomponente, d. h. zum Fortbewegen des Fahrzeuges, notwendig, dass eine Energieversorgung durch die Batterie für die Fahrzeugkomponente bereitgestellt wird. Es kann hierbei vorgesehen sein, dass bei einer Aufladung der Batterie diese Energieversorgung verhindert wird, um die Sicherheit beim Betrieb des Fahrzeuges in der Aufladephase zu erhöhen.

Es kann optional möglich sein, dass der Ladeverbindungspunkt als ein erster Verbindungspunkt ausgeführt ist, wobei ein zweiter Verbindungspunkt zur Verbindung der Fahrzeugkomponente mit der Batterie über ein zweites elektronisches Schaltelement und ein dritter Verbindungspunkt zur Verbindung der Fahrzeugkomponente mit der Batterie über ein erstes elektronisches Schaltelement vorgesehen ist, wobei der erste Verbindungspunkt im Strompfad zwischen dem zweiten elektronischen Schaltelement und der Batterie integriert ist, sodass vorzugsweise unabhängig von einem zweiten Schaltzustand des zweiten elektronischen Schaltelements und/oder auch bei einem ausgeschalteten zweiten Schaltzustand eine elektrische Verbindung zwischen dem ersten Verbindungspunkt und der Batterie besteht. Insbesondere kann dabei der dritte Verbindungspunkt ebenfalls als weiterer Verbindungspunkt zum Aufladen mit der Ladevorrichtung vorgesehen sein, wobei der Ladeverbindungspunkt (erster Verbindungspunkt) und der dritte Verbindungspunkt mit unterschiedlichen Anschlüssen bzw. Polen des Ladegeräts verbunden werden. Damit kann die Aufladung konstruktiv einfach und sicher erfolgen.

Ebenfalls Gegenstand der Erfindung ist ein Ladesystem zur (elektrischen) Aufladung bei einem Batteriesystem eines Fahrzeuges, vorzugsweise eines Flurförderzeuges, aufweisend:
- wenigstens eine wiederaufladbare Batterie des Batteriesystems zur Energieversorgung wenigstens einer Fahrzeugkomponente des Fahrzeuges,
- wenigstens zwei elektronische Schaltelemente des Batteriesystems jeweils zur Herstellung einer elektrischen Verbindung der Batterie mit der Fahrzeugkomponente,
- wenigstens eine Ladevorrichtung (Ladegerät) zur Energieübertragung an die Batterie.

Erfindungsgemäß ist vorgesehen, dass ein Ladeverbindungspunkt des Batteriesystems vorgesehen ist, welcher elektrisch unabhängig von den elektronischen Schaltelementen elektrisch mit der Batterie verbunden ist, und vorzugsweise zur lösbaren elektrischen Verbindung mit der Ladevorrichtung ausgeführt ist, sodass die Energieübertragung durch die Ladevorrichtung auch bei einem ausgeschalteten Schaltzustand und unabhängig von einem Schaltzustand wenigstens eines der elektronischen Schaltelemente durchführbar ist.

Damit bringt das erfindungsgemäße Ladesystem die gleichen Vorteile mit sich, wie sie ausführlich mit Bezug auf ein erfindungsgemäßes Batteriesystem beschrieben worden sind. Zudem kann das Ladesystem ein erfindungsgemäßes Batteriesystem aufweisen.

Von weiterem Vorteil kann vorgesehen sein, dass die Ladevorrichtung einen Ladestecker aufweist, wobei vorzugsweise wenigstens ein erster Anschluss des Ladesteckers zur Aufladung der Batterie mit wenigstens dem Ladeverbindungspunkt elektrisch und/oder lösbar verbunden ist und/oder verbindbar ist, und wenigstens ein zweiter Anschluss des Ladesteckers zur Aufladung der Batterie mit wenigstens einem weiteren (insbesondere einem dritten) Verbindungspunkt elektrisch und/oder lösbar verbunden ist und/ode verbindbar ist. Dies ermöglicht es, einfach und zuverlässig die Aufladung durchzuführen.

Des Weiteren kann vorgesehen sein, dass die Ladevorrichtung, vorzugsweise ein Ladestecker der Ladevorrichtung, wenigstens eine elektrische Umschaltkomponente, insbesondere eine passive und/oder elektromechanische Komponente, aufweist, welche bevorzugt dazu ausgeführt ist, bei Kontaktierung mit dem Batteriesystem, insbesondere mit einem Anschluss eines Batteriemanagementsystems, eine Umschaltung wenigstens einer der elektronischen Schaltelemente in einen ausgeschalteten Schaltzustand zu initiieren, sodass vorzugsweise bei der Kontaktierung des Ladesteckers zur Durchführung der Aufladung die Energieversorgung (der Batterie) zur Fahrzeugkomponente, insbesondere ein Antrieb des Fahrzeuges, verhindert ist. Damit kann die sichere Trennung der Batterie von der Fahrzeugkomponente beim Kontaktieren der Ladevorrichtung mit dem Batteriesystem gewährleistet werden.

Ebenfalls Gegenstand der Erfindung ist ein (Lade-) Verfahren zur Aufladung bei einem Batteriesystem eines Fahrzeuges.

Hierbei ist insbesondere vorgesehen, dass das Fahrzeug als ein Flurförderzeug ausgeführt ist. Erfindungsgemäß umfasst das Fahrzeug wenigstens eine wiederaufladbare Batterie des Batteriesystems zur Energieversorgung wenigstens einer Fahrzeugkomponente des Fahrzeuges. Dabei sind wenigstens zwei elektronische Schaltelemente des Batteriesystems jeweils zur Herstellung einer elektrischen Verbindung (d. h. elektrisch leitenden bzw. zur Stromführung geeigneten Verbindung) der Batterie mit der Fahrzeugkomponente vorgesehen.

Erfindungsgemäß ist vorgesehen, dass die nachfolgenden Schritte durchgeführt werden:
- Verbinden einer Ladevorrichtung mit einem Ladeverbindungspunkt des Batteriesystems, welcher elektrisch unabhängig von den elektronischen Schaltelementen elektrisch mit der Batterie verbunden ist,
- Initiieren eines Ausschaltens wenigstens eines der elektronischen Schaltelemente in einen ausgeschalteten Schaltzustand, sodass die Energieversorgung der Fahrzeugkomponente unterbrochen wird, d. h. zumindest überwiegend reduziert und/oder vollständig unterbrochen wird, d. h. insbesondere eine vollständige bzw. ausreichende Energieversorgung der Fahrzeugkomponente und/oder eine Fortbewegung des Fahrzeuges durch die Fahrzeugkomponente verhindert wird,
- Initiieren eines Aufladevorgangs zur Aufladung der Batterie durch die Ladevorrrichtung, wobei wenigstens ein erstes und zweites elektronisches Schaltelement vorgesehen sind, wobei- das erste elektronische Schaltelement in einen ersten Strompfad integriert ist, und in einen eingeschalteten ersten Schaltzustand gebracht wird, sodass eine erste elektrische Verbindung der Batterie mit der Fahrzeugkomponente und mit der Ladevorrichtung im ersten Strompfad hergestellt wird,- das zweite elektronische Schaltelement in einen zweiten Strompfad integriert ist, und in einen eingeschalteten zweiten Schaltzustand gebracht wird, sodass eine zweite elektrische Verbindung der Batterie mit der Fahrzeugkomponente im zweiten Strompfad hergestellt wird,wobei der Ladeverbindungspunkt zur elektrischen Verbindung der Batterie mit der Ladevorrichtung unabhängig von dem zweiten Schaltzustand des zweiten elektronischen Schaltelements ausgeführt ist.

Damit bringt das erfindungsgemäße Verfahren die gleichen Vorteile mit sich, wie sie ausführlich mit Bezug auf ein erfindungsgemäßes Batteriesystem und ein erfindungsgemäßes Ladesystem beschrieben worden sind. Zudem kann das Verfahren geeignet sein, ein erfindungsgemäßes Batteriesystem und/oder ein erfindungsgemäßes Ladesystem zu betreiben.

Zudem ist es im Rahmen der Erfindung denkbar, dass das Initiieren des Ausschaltens des wenigstens einen der elektronischen Schaltelemente ausgelöst durch das Verbinden der Ladevorrichtung erfolgt, insbesondere automatisch durch eine Herstellung eines elektrischen Kontakts beim Verbinden durch wenigstens eine Umschaltkomponente eines Ladesteckers. Damit kann die Sicherheit bei der Aufladung (des Aufladevorgangs) weiter erhöht werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen jeweils schematisch:
- Fig. 1: eine Darstellung eines erfindungsgemäßen Ladesystems bzw. eines erfindungsgemäßen Batteriesystems durch ein Prinzipschaltbild,
- Fig. 2: ein weiteres Prinzipschaltbild von Teilen eines erfindungsgemäßen Batteriesystems sowie eines erfindungsgemäßen Ladesystems,
- Fig. 3: ein weiteres Prinzipschaltbild eines erfindungsgemäßen Ladesystems sowie eines erfindungsgemäßen Batteriesystems,
- Fig. 4: eine Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

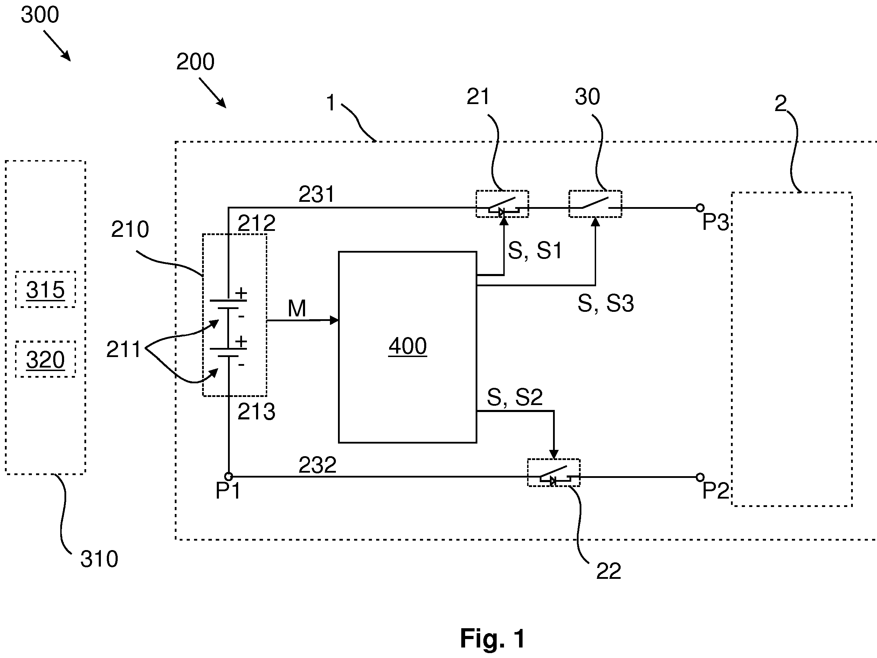

In Figur 1 ist schematisch der prinzipielle Aufbau eines erfindungsgemäßen Ladesystems 300 sowie eines erfindungsgemäßen Batteriesystems 200 gezeigt. Zum Betreiben, insbesondere zum Fortbewegen, eines Fahrzeuges 1 ist hierbei eine wiederaufladbare Batterie 210 des Fahrzeuges 1 vorgesehen. Die Batterie 210 kann dabei ein oder mehrere Batteriezellen 211 aufweisen, wie schematisch dargestellt ist. Um eine Energieversorgung wenigstens einer Fahrzeugkomponente 2 des Fahrzeuges, beispielsweise eines Elektromotors, zu ermöglichen, ist die wiederaufladbare Batterie 210 über einen zweiten und dritten Verbindungspunkt P2, P3 mit der Fahrzeugkomponente 2 verbunden. Die Fahrzeugkomponente 2 kann (z. B. neben dem Elektromotor) gegebenenfalls auch ein elektrisches Netz und/oder ein Bordnetz des Fahrzeuges 1 umfassen.

Die Energieversorgung der Fahrzeugkomponente 2 wird insbesondere dadurch ermöglicht, dass ein erster Strompfad 231 den dritten Verbindungspunkt P3 mit einem Pluspol 212 der Batterie 210 verbindet, und ein zweiter Strompfad 232 den zweiten Verbindungspunkt P2 mit einem Minuspol 213 der Batterie verbindet. Des Weiteren sind in den jeweiligen Strompfaden 231, 232 elektronische Schaltelemente 20 vorgesehen. Die Schaltelemente 20 ermöglichen es, im ausgeschalteten Schaltzustand den Stromfluss zu sperren und im eingeschalteten Schaltzustand den Stromfluss zuzulassen. Insbesondere sind dabei die elektronischen Schaltelemente 20 als Halbleiterschalter ausgeführt, sodass bevorzugt im ausgeschalteten Schaltzustand das jeweilige Schaltelement 20 den Stromfluss nur in einer Stromrichtung sperrt. Dies ermöglicht eine komplexe und flexible Steuerung des Stromflusses, insbesondere durch ein Batteriemanagementsystem 400. Hierzu kann das Batteriemanagementsystem 400 beispielsweise über Steuerungspfade S, insbesondere über einen ersten und zweiten Steuerungspfad S1, S2, elektrisch mit den jeweiligen Schaltelementen 20 verbunden sein und/oder diese ansteuern.

Optional kann es möglich sein, dass in wenigstens einem der Strompfade, insbesondere im ersten Strompfad 231, ein weiteres Schaltelement 30 vorgesehen ist. Auch dieses kann gegebenenfalls durch das Batteriemanagementsystem 400 über wenigstens einen entsprechenden weiteren Steuerungspfad S3 angesteuert werden. Es kann dabei möglich sein, dass ein erstes elektronisches Schaltelement 21 direkt mit dem Pluspol 212 der Batterie 210 verbunden ist, und ein zweites elektronisches Schaltelement 22 direkt mit dem Minuspol 213 der Batterie 210 verbunden ist. Außerdem ist es denkbar, dass eine Messung M bzw. ein Messpfad M vorgesehen ist, welcher eine Überwachung der Batterie 210 durch das Batteriemanagementsystem 400 ermöglicht. Bevorzugt können dabei elektrische Signale über die Steuerungspfade S in Abhängigkeit von dieser Messung und/oder Überwachung ausgegeben werden, um so die jeweiligen elektronischen Schaltelemente 20 in Abhängigkeit von der Überwachung und/oder Messung anzusteuern.

Um nun die Energieversorgung für die Fahrzeugkomponente 2 vollständig herzustellen, ist es erforderlich, dass sowohl das erste elektronische Schaltelement 21 als auch das zweite elektronische Schaltelement 22 eingeschaltet werden (und damit einen Stromfluss durch die jeweiligen Strompfade 231, 232 ermöglichen).

Für ein Aufladen der Batterie 210 weist ferner das Ladesystem 300 eine Ladevorrichtung 310 auf. Die Ladevorrichtung 310 umfasst beispielsweise wenigstens einen Ladestecker 315 und/oder wenigstens eine Umschaltkomponente 320.

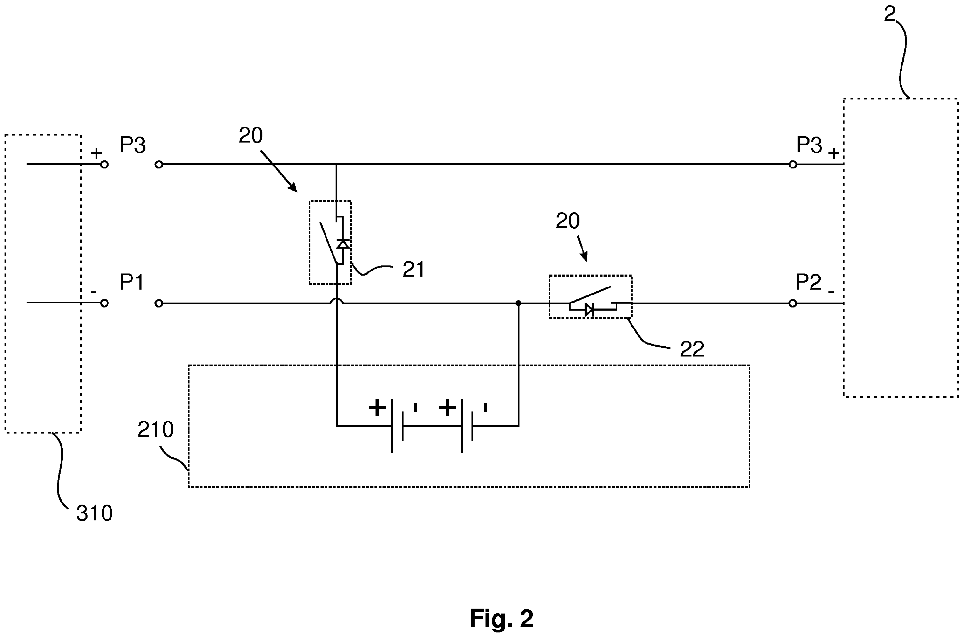

Wie in Figur 2 dargestellt ist, können dabei die Anschlüsse bzw. Pole der Ladevorrichtung 310 mit entsprechenden Verbindungspunkten P1, P3 des Batteriesystems 200 verbunden werden. Insbesondere wird dabei für einen ersten der Anschlüsse der Ladevorrichtung 310 ein Verbindungspunkt genutzt, mit welchem auch die Verbindung zur Fahrzeugkomponente 2 erfolgt (beispielsweise der dritte Verbindungspunkt P3). Darüber hinaus ist noch ein erster Verbindungspunkt P1 als Ladeverbindungspunkt vorgesehen, welcher (insbesondere ausschließlich) zur Kontaktierung eines zweiten Anschlusses der Anschlüsse der Ladevorrichtung 310 dient. Wie den Figuren 1 bis 3 zu entnehmen ist, ist dabei der erste Verbindungspunkt P1 derart im Batteriesystem 200 integriert, dass eine elektrische Verbindung zwischen der Batterie 210 und dem ersten Verbindungspunkt P1 auch bei einem ausgeschalteten (zweiten) Schaltzustand und unabhängig von einem zweiten Schaltzustand des zweiten elektronischen Schaltelements 22 möglich ist.

Auf diese Weise kann die Sicherheit beim Aufladen der Batterie 210 erhöht werden, indem während des Aufladevorgangs das zweite elektronische Schaltelement 22 in einen ausgeschalteten Schaltzustand überführt wird. Dies bewirkt eine Sperrung eines Stromflusses zur Fahrzeugkomponente 2 derart, dass eine ausreichende Energieversorgung zum Betrieb der Fahrzeugkomponente 2 verhindert wird.

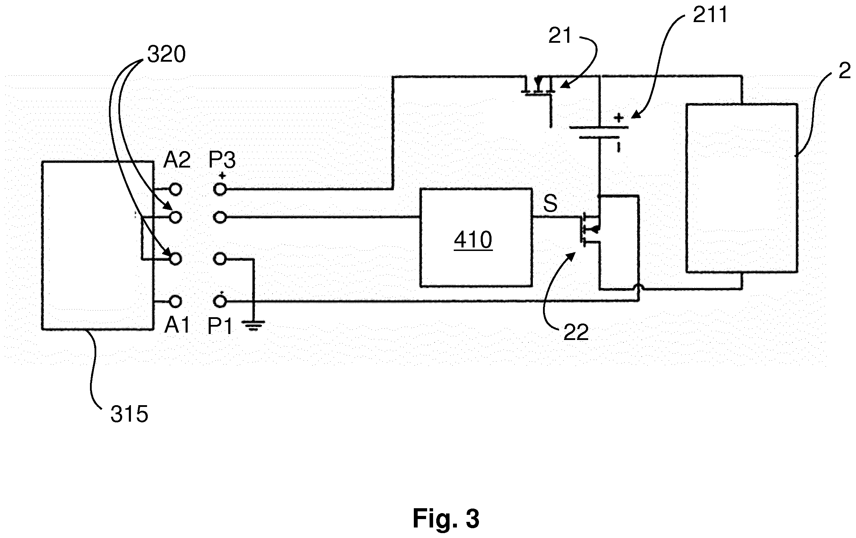

Um die Sicherheit weiter zu erhöhen, kann wenigstens eine Umschaltkomponente 320 am Ladestecker 315 vorgesehen sein. So ist in Figur 3 schematisch gezeigt, dass anhand der wenigstens einen Umschaltkomponente 320 durch eine Überwachungs- und/oder Betriebsvorrichtung 410 (beispielsweise des Batteriemanagementsystems 400) eine Kontaktierung der Ladevorrichtung 310 mit dem Batteriesystem 200 detektiert werden kann. In Abhängigkeit von dieser Detektion kann dann beispielsweise ein Signal über wenigstens einen der Steuerungspfade S ausgegeben werden, um insbesondere das zweite elektronische Schaltelement 22 in den ausgeschalteten Schaltzustand zu überführen. Insbesondere dient dabei die wenigstens eine Umschaltkomponente 320 dazu, beim Kontaktieren zwei Signalleitungen zu brücken (wie in Figur 3 zu sehen ist). Hierzu kann die Umschaltkomponente 320 beispielsweise als elektrischer (insbesondere elektrisch leitender) Hilfskontakt, bspw. aus wenigstens einem Metall, ausgeführt sein. Insbesondere ist dabei die Umschaltkomponente 320 fest mit dem Ladestecker 315 verbunden.

Ferner ist in Figur 3 gezeigt, dass der Ladestecker 315 einen ersten Anschluss A1 und einen zweiten Anschluss A2 aufweisen kann. Beim Kontaktieren der Ladevorrichtung 310 mit dem Batteriesystem 200 kann dabei beispielsweise der erste Anschluss A1 mit dem ersten Verbindungspunkt P1 und der zweite Anschluss A2 mit dem dritten Verbindungspunkt P3 in Kontakt gebracht werden.

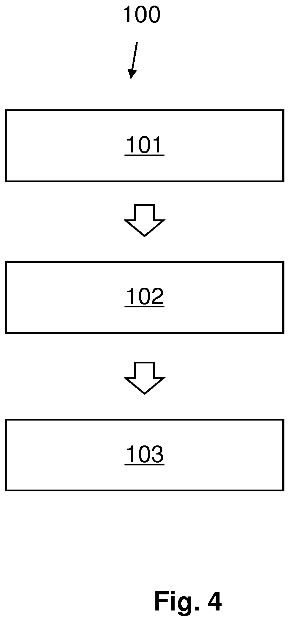

In Figur 4 ist schematisch ein erfindungsgemäßes Verfahren 100 visualisiert. Dabei erfolgt gemäß einem ersten Verfahrensschritt 101 ein Verbinden einer Ladevorrichtung 310 mit einem Ladeverbindungspunkt P1 eines Batteriesystems 200. Gemäß einem zweiten Verfahrensschritt 102 erfolgt ein Initiieren eines Ausschaltens wenigstens eines elektronischen Schaltelementes 20 in einen ausgeschalteten Schaltzustand. Gemäß einem dritten Verfahrensschritt 103 erfolgt ein Initiieren eines Aufladevorgangs zur Aufladung von einer Batterie 210 durch die Ladevorrichtung 310.

Die voranstehende Erläuterung der Ausführungsformen beschreibt die vorliegende Erfindung ausschließlich im Rahmen von Beispielen.

### Bezugszeichenliste

- 1: Fahrzeug
- 2: Fahrzeugkomponente

- 20: elektronisches Schaltelement
- 21: erstes elektronisches Schaltelement
- 22: zweites elektronisches Schaltelement

- 30: weiteres Schaltelement

- 100: Verfahren

- 200: Batteriesystem
- 210: Batterie
- 211: Batteriezelle
- 212: Pluspol
- 213: Minuspol

- 231: erster Strompfad, positiver Strompfad, Pluszweig
- 232: zweiter Strompfad, negativer Strompfad, Minuszweig

- 300: Ladesystem
- 310: Ladevorrichtung
- 315: Ladestecker

- 320: Umschaltkomponente

- 400: Batteriemanagementsystem
- 410: Überwachungs- und/oder Betriebsvorrichtung
- A1: erster Anschluss
- A2: zweiter Anschluss
- M: Messung, Messpfad
- P1: erster Verbindungspunkt, Ladeverbindungspunkt
- P2: zweiter Verbindungspunkt
- P3: dritter Verbindungspunkt
- S: Steuerungspfad
- S1: erster Steuerungspfad
- S2: zweiter Steuerungspfad
- S3: weiterer Steuerungspfad

## Patentansprüche

1. Batteriesystem (200) für ein Fahrzeug (1), vorzugsweise für ein Flurförderzeug, aufweisend:
- wenigstens eine wiederaufladbare Batterie (210) zur Energieversorgung wenigstens einer Fahrzeugkomponente (2) des Fahrzeuges (1),
- wenigstens zwei elektronische Schaltelemente (20) jeweils zur Herstellung einer elektrischen Verbindung der Batterie (210) mit der Fahrzeugkomponente (2),
wobei
ein Ladeverbindungspunkt (P1) vorgesehen ist, welcher elektrisch unabhängig von den elektronischen Schaltelementen (20) elektrisch mit der Batterie (210) verbunden ist, und zur elektrischen Verbindung mit einer Ladevorrichtung (310) ausgeführt ist, sodass eine Aufladung der Batterie (210) durch die Ladevorrichtung (310) bei einem ausgeschalteten Schaltzustand wenigstens eines der elektronischen Schaltelemente (20) durchführbar ist,
wobei wenigstens ein erstes und zweites elektronisches Schaltelement (21, 22) vorgesehen sind, wobei
- das erste elektronische Schaltelement (21) in einen ersten Strompfad (231) integriert ist, und in einen eingeschalteten ersten Schaltzustand bringbar ist, sodass eine erste elektrische Verbindung der Batterie (210) mit der Fahrzeugkomponente (2) und mit der Ladevorrichtung (310) im ersten Strompfad (231) herstellbar ist,
- das zweite elektronische Schaltelement (22) in einen zweiten Strompfad (232) integriert ist, und in einen eingeschalteten zweiten Schaltzustand bringbar ist, sodass eine zweite elektrische Verbindung der Batterie (210) mit der Fahrzeugkomponente (2) im zweiten Strompfad (232) herstellbar ist,
wobei der Ladeverbindungspunkt (P1) zur elektrischen Verbindung der Batterie (210) mit der Ladevorrichtung (310) unabhängig von dem zweiten Schaltzustand des zweiten elektronischen Schaltelements (22) ausgeführt ist.

2. Batteriesystem (200) nach Anspruch 1,
**dadurch gekennzeichnet,**
**dass** ein Steuerungspfad (S), insbesondere eines Batteriemanagementsystems (400), elektrisch mit wenigstens einem der elektronischen Schaltelemente (22) verbunden ist, sodass bei der Verbindung mit der Ladevorrichtung (310) wenigstens eines der elektronischen Schaltelemente (22) über den Steuerungspfad (S) in den ausgeschalteten Schaltzustand bringbar ist, um die elektrische Verbindung der Batterie (210) mit der Fahrzeugkomponente (2) zumindest teilweise zu unterbrechen.

3. Batteriesystem (200) nach Anspruch 1 oder 2,
**dadurch gekennzeichnet,**
**dass** der erste Strompfad (231) als positiver Strompfad (231) ausgeführt ist, welcher elektrisch mit einem Pluspol (212) der Batterie (210) verbunden ist, und der zweite Strompfad (232) als negativer Strompfad (232) ausgeführt ist, welcher elektrisch mit einem Minuspol (213) der Batterie (210) verbunden ist.

4. Batteriesystem (200) nach einem der vorhergehenden Ansprüche,
**dadurch gekennzeichnet,**
**dass** ein Batteriemanagementsystem (400) vorgesehen ist, welches elektrisch mit den Schaltelementen über jeweilige Steuerungspfade (S) verbunden ist, sodass
- für einen Aufladevorgang ein erstes elektronisches Schaltelement (21) in einen eingeschalteten ersten Schaltzustand und ein zweites elektronisches Schaltelement (22) in einen ausgeschalteten zweiten Schaltzustand bringbar ist, und
- für eine bereitgestellte Energieversorgung zur Fahrzeugkomponente (2) das erste elektronische Schaltelement (21) in einen eingeschalteten ersten Schaltzustand und das zweite elektronische Schaltelement (22) in einen eingeschalteten zweiten Schaltzustand bringbar ist, und
- für eine vollständige Unterbrechung zur Fahrzeugkomponente (2) das erste elektronische Schaltelement (21) in einen ausgeschalteten ersten Schaltzustand und das zweite elektronische Schaltelement (22) in einen ausgeschalteten zweiten Schaltzustand bringbar ist.

5. Batteriesystem (200) nach einem der vorhergehenden Ansprüche,
**dadurch gekennzeichnet,**
**dass** eines der elektronischen Schaltelemente (22) und der Ladeverbindungspunkt (P1) jeweils direkt mit der Batterie (210), insbesondere mit einem Minuspol (213) der Batterie (210), elektrisch verbunden sind.

6. Batteriesystem (200) nach einem der vorhergehenden Ansprüche,
**dadurch gekennzeichnet,**
**dass** die elektronischen Schaltelemente (20) antiparallel zueinander in einen Schaltkreis zur Energieversorgung der Fahrzeugkomponente (2) integriert sind, wobei vorzugsweise die elektronischen Schaltelemente (20) jeweils als Halbleiterschalter, vorzugsweise als Leistungs-Halbleiterschalter, insbesondere als Feldeffekttransistor, ausgeführt sind, und wobei die elektronischen Schaltelemente (20) dazu ausgeführt sind, im jeweils ausgeschalteten Schaltzustand jeweils nur in einer Stromrichtung einen Stromfluss zu sperren.

7. Batteriesystem (200) nach einem der vorhergehenden Ansprüche,
**dadurch gekennzeichnet,**
**dass** das Batteriesystem (200) zur Energieversorgung der Fahrzeugkomponente (2) als elektrische Antriebskomponente, insbesondere als Elektromotor, des Fahrzeuges (1) ausgeführt ist.

8. Batteriesystem (200) nach einem der vorhergehenden Ansprüche,
**dadurch gekennzeichnet,**
**dass** der Ladeverbindungspunkt (P1) als ein erster Verbindungspunkt (P1) ausgeführt ist, wobei ein zweiter Verbindungspunkt (P2) zur Verbindung der Fahrzeugkomponente (2) mit der Batterie (210) über ein zweites elektronisches Schaltelement (22) und ein dritter Verbindungspunkt (P3) zur Verbindung der Fahrzeugkomponente (2) mit der Batterie (210) über ein erstes elektronisches Schaltelement (21) vorgesehen ist, wobei der erste Verbindungspunkt (P1) im Strompfad zwischen dem zweiten elektronischen Schaltelement (22) und der Batterie (210) integriert ist, sodass unabhängig von einem zweiten Schaltzustand des zweiten elektronischen Schaltelements (22) eine elektrische Verbindung zwischen dem ersten Verbindungspunkt (P1) und der Batterie (210) besteht.

9. Ladesystem (300) zur Aufladung bei einem Batteriesystem (200) eines Fahrzeuges (1), vorzugsweise eines Flurförderzeuges, aufweisend:
- wenigstens eine wiederaufladbare Batterie (210) des Batteriesystems (200) zur Energieversorgung wenigstens einer Fahrzeugkomponente (2) des Fahrzeuges (1),
- wenigstens zwei elektronische Schaltelemente (20) des Batteriesystems (200) jeweils zur Herstellung einer elektrischen Verbindung der Batterie (210) mit der Fahrzeugkomponente (2),
- wenigstens eine Ladevorrichtung (310) zur Energieübertragung an die Batterie (210), wobei ein Ladeverbindungspunkt (P1) des Batteriesystems (200) vorgesehen ist, welcher elektrisch unabhängig von den elektronischen Schaltelementen (20) elektrisch mit der Batterie (210) verbunden ist, und
zur lösbaren elektrischen Verbindung mit der Ladevorrichtung (310) ausgeführt ist, sodass die Energieübertragung an die Batterie
durch die Ladevorrichtung (310) bei einem
ausgeschalteten Schaltzustand wenigstens eines der elektronischen Schaltelemente (20) durchführbar ist,
wobei wenigstens ein erstes und zweites elektronisches Schaltelement (21, 22) vorgesehen sind, wobei
- das erste elektronische Schaltelement (21) in einen ersten Strompfad (231) integriert ist, und in einen eingeschalteten ersten Schaltzustand bringbar ist, sodass eine erste elektrische Verbindung der Batterie (210) mit der Fahrzeugkomponente (2) und mit der Ladevorrichtung (310) im ersten Strompfad (231) herstellbar ist,
- das zweite elektronische Schaltelement (22) in einen zweiten Strompfad (232) integriert ist, und in einen eingeschalteten zweiten Schaltzustand bringbar ist, sodass eine zweite elektrische Verbindung der Batterie (210) mit der Fahrzeugkomponente (2) im zweiten Strompfad (232) herstellbar ist,
wobei der Ladeverbindungspunkt (P1) zur elektrischen Verbindung der Batterie (210) mit der Ladevorrichtung (310) unabhängig von dem zweiten Schaltzustand des zweiten elektronischen Schaltelements (22) ausgeführt ist

10. Ladesystem (300) nach Anspruch 9,
**dadurch gekennzeichnet,**
**dass** die Ladevorrichtung (310) einen Ladestecker (315) aufweist, wobei wenigstens ein erster Anschluss (A1) des Ladesteckers (315) zur Aufladung der Batterie (210) mit wenigstens dem Ladeverbindungspunkt (P1) elektrisch und lösbar verbunden ist, und wenigstens ein zweiter Anschluss (A2) des Ladesteckers (315) zur Aufladung der Batterie (210) mit wenigstens einem weiteren Verbindungspunkt (P3) elektrisch und lösbar verbunden ist.

11. Ladesystem (300) nach Anspruch 9 oder 10,
**dadurch gekennzeichnet,**
**dass** die Ladevorrichtung (310), vorzugsweise ein Ladestecker (315) der Ladevorrichtung (310), wenigstens eine elektrische Umschaltkomponente (320), insbesondere eine passive und/oder elektromechanische Komponente, aufweist, welche dazu ausgeführt ist, bei Kontaktierung mit dem Batteriesystem (200), insbesondere mit einem Anschluss eines Batteriemanagementsystems (400), eine Umschaltung wenigstens einer der elektronischen Schaltelemente (22) in einen ausgeschalteten Schaltzustand zu initiieren, sodass vorzugsweise bei der Kontaktierung des Ladesteckers (315) zur Durchführung der Aufladung die Energieversorgung zur Fahrzeugkomponente (2), insbesondere ein Antrieb des Fahrzeuges (1), verhindert ist.

12. Ladesystem (300) nach einem der Ansprüche 9 bis 11,
**dadurch gekennzeichnet,**
**dass** das Batteriesystem (200) nach einem der Ansprüche 1 bis 8 ausgeführt ist.

13. Verfahren (100) zur Aufladung bei einem Batteriesystem (200) eines Fahrzeuges (1), vorzugsweise eines Flurförderzeuges, mit wenigstens einer wiederaufladbaren Batterie (210) des Batteriesystems (200) zur Energieversorgung wenigstens einer Fahrzeugkomponente (2) des Fahrzeuges (1), und wenigstens zwei elektronischen Schaltelementen (20) des Batteriesystems (200) jeweils zur Herstellung einer elektrischen Verbindung der Batterie (210) mit der Fahrzeugkomponente (2), umfassend **die nachfolgenden Schritte:**
- Verbinden einer Ladevorrichtung (310) mit einem Ladeverbindungspunkt (P1) des Batteriesystems (200), welcher elektrisch unabhängig von den elektronischen Schaltelementen (20) elektrisch mit der Batterie (210) verbunden ist,
- Initiieren eines Ausschaltens wenigstens eines der elektronischen Schaltelemente (22) in einen ausgeschalteten Schaltzustand, sodass die Energieversorgung der Fahrzeugkomponente (2) überwiegend reduziert und/oder vollständig unterbrochen wird,
- Initiieren eines Aufladevorgangs zur Aufladung der Batterie (210) durch die Ladevorrichtung (310),
wobei wenigstens ein erstes und zweites elektronisches Schaltelement (21, 22) vorgesehen sind, wobei
- das erste elektronische Schaltelement (21) in einen ersten Strompfad (231) integriert ist, und in einen eingeschalteten ersten Schaltzustand gebracht wird, sodass eine erste elektrische Verbindung der Batterie (210) mit der Fahrzeugkomponente (2) und mit der Ladevorrichtung (310) im ersten Strompfad (231) hergestellt wird,
- das zweite elektronische Schaltelement (22) in einen zweiten Strompfad (232) integriert ist, und in einen eingeschalteten zweiten Schaltzustand gebracht wird, sodass eine zweite elektrische Verbindung der Batterie (210) mit der Fahrzeugkomponente (2) im zweiten Strompfad (232) hergestellt wird,
wobei der Ladeverbindungspunkt (P1) zur elektrischen Verbindung der Batterie (210) mit der Ladevorrichtung (310) unabhängig von dem zweiten Schaltzustand des zweiten elektronischen Schaltelements (22) ausgeführt ist.

14. Verfahren (100) nach Anspruch 13,
**dadurch gekennzeichnet,**
**dass** das Initiieren des Ausschaltens des wenigstens einen der elektronischen Schaltelemente (22) ausgelöst durch das Verbinden der Ladevorrichtung (310) erfolgt, insbesondere automatisch durch eine Herstellung eines elektrischen Kontakts beim Verbinden durch wenigstens eine Umschaltkomponente (320) eines Ladesteckers (315).

15. Verfahren (100) nach Anspruch 13 oder 14,
**dadurch gekennzeichnet,**
**dass** ein Batteriesystem (200) nach einem der Ansprüche 1 bis 8 und/oder ein Ladesystem (300) nach einem der Ansprüche 10 bis 12 betrieben wird.

## Claims

1. Battery system (200) for a vehicle (1), preferably for an industrial truck, comprising:
- at least one rechargeable battery (210) for supplying energy to at least one vehicle component (2) of the vehicle (1),
- at least two electronic switching elements (20) each for establishing an electrical connection of the battery (210) to the vehicle component (2),
**wherein** a charging connection point (P1) is provided which is electrically connected to the battery (210) electrically independently of the electronic switching elements (20) and is designed for electrical connection to a charging device (310), so that charging of the battery (210) by the charging device (310) can be carried out when at least one of the electronic switching elements (20) is in a switched-off switching state,
wherein at least one first and second electronic switching element (21, 22) are provided, wherein
- the first electronic switching element (21) is integrated in a first current path (231) and can be brought into a switched-on first switching state, so that a first electrical connection of the battery (210) to the vehicle component (2) and to the charging device (310) can be established in the first current path (231),
- the second electronic switching element (22) is integrated in a second current path (232) and can be brought into a switched-on second switching state, so that a second electrical connection of the battery (210) to the vehicle component (2) can be established in the second current path (232),
wherein the charging connection point (P1) for electrically connecting the battery (210) to the charging device (310) is implemented independently of the second switching state of the second electronic switching element (22).

2. Battery system (200) according to claim 1,
**characterized in that**
a control path (S), in particular of a battery management system (400), is electrically connected to at least one of the electronic switching elements (22), so that, when connected to the charging device (310), at least one of the electronic switching elements (22) can be brought into the switched-off switching state via the control path (S) in order to at least partially interrupt the electrical connection of the battery (210) to the vehicle component (2).

3. Battery system (200) according to claim 1 or 2,
**characterized in that**
the first current path (231) is designed as a positive current path (231) which is electrically connected to a positive pole (212) of the battery (210), and the second current path (232) is designed as a negative current path (232) which is electrically connected to a negative pole (213) of the battery (210).

4. Battery system (200) according to any one of the preceding claims,
**characterized in that**
a battery management system (400) is provided which is electrically connected to the switching elements via respective control paths (S) so that
- for a charging process, a first electronic switching element (21) can be brought into a switched-on first switching state and a second electronic switching element (22) can be brought into a switched-off second switching state, and
- for a provided energy supply to the vehicle component (2), the first electronic switching element (21) can be brought into a switched-on first switching state and the second electronic switching element (22) can be brought into a switched-on second switching state, and
- for a complete interruption to the vehicle component (2), the first electronic switching element (21) can be brought into a switched-off first switching state and the second electronic switching element (22) can be brought into a switched-off second switching state.

5. Battery system (200) according to any one of the preceding claims,
**characterized in that**
one of the electronic switching elements (22) and the charging connection point (P1) are each electrically connected directly to the battery (210), in particular to a negative pole (213) of the battery (210).

6. Battery system (200) according to any one of the preceding claims,
**characterized in that**
the electronic switching elements (20) are integrated antiparallel to one another in a circuit for supplying energy to the vehicle component (2), wherein preferably the electronic switching elements (20) are each designed as a semiconductor switch, preferably as an energy semiconductor switch, in particular as a field-effect transistor, and wherein the electronic switching elements (20) each are designed to block a current flow in only one current direction in the respective switched-off switching state.

7. Battery system (200) according to any one of the preceding claims,
**characterized in that**
the battery system (200) for supplying energy to the vehicle component (2) is designed as an electrical drive component, in particular as an electric motor, of the vehicle (1).

8. Battery system (200) according to any one of the preceding claims,
**characterized in that**
the charging connection point (P1) is designed as a first connection point (P1), wherein a second connection point (P2) is provided for connecting the vehicle component (2) to the battery (210) via a second electronic switching element (22), and a third connection point (P3) is provided for connecting the vehicle component (2) to the battery (210) via a first electronic switching element (21) wherein the first connection point (P1) is integrated in the current path between the second electronic switching element (22) and the battery (210), so that an electrical connection exists between the first connection point (P1) and the battery (210) independent of a second switching state of the second electronic switching element (22).

9. Charging system (300) for charging in a battery system (200) of a vehicle (1), preferably an industrial truck, comprising:
- at least one rechargeable battery (210) of the battery system (200) for supplying energy to at least one vehicle component (2) of the vehicle (1),
- at least two electronic switching elements (20) of the battery system (200) each for establishing an electrical connection of the battery (210) to the vehicle component (2),
- at least one charging device (310) for transferring energy to the battery (210),
**wherein** a charging connection point (P1) of the battery system (200) is provided which is electrically connected to the battery (210) electrically independently of the electronic switching elements (20), and is designed for detachable electrical connection to the charging device (310),
so that the transfer of energy to the battery by the charging device (310) can be carried out when at least one of the electronic switching elements (20) is in a switched-off switching state,
wherein at least one first and second electronic switching element (21, 22) are provided, wherein
- the first electronic switching element (21) is integrated in a first current path (231) and can be brought into a switched-on first switching state, so that a first electrical connection of the battery (210) to the vehicle component (2) and to the charging device (310) can be established in the first current path (231),
- the second electronic switching element (22) is integrated in a second current path (232) and can be brought into a switched-on second switching state, so that a second electrical connection of the battery (210) to the vehicle component (2) can be established in the second current path (232),
wherein the charging connection point (P1) for electrically connecting the battery (210) to the charging device (310) is implemented independently of the second switching state of the second electronic switching element (22).

10. Charging system (300) according to claim 9,
**characterized in that**
the charging device (310) comprises a charging plug (315), wherein at least a first connection (A1) of the charging plug (315) for charging the battery (210) is electrically and detachably connected to at least the charging connection point (P1), and at least a second connection (A2) of the charging plug (315) for charging the battery (210) is electrically and detachably connected to at least one further connection point (P3).

11. Charging system (300) according to claim 9 or 10,
**characterized in that**
the charging device (310), preferably a charging plug (315) of the charging device (310), comprises at least one electrical switching component (320), in particular a passive and/or electromechanical component, which is designed to initiate a switching of at least one of the electronic switching elements (22) to a switched-off switching state when contact is made with the battery system (200), in particular with a connection of a battery management system (400), so that preferably the energy supply to the vehicle component (2), in particular a drive of the vehicle (1), is prevented when the charging plug (315) is contacted in order to carry out the charging.

12. Charging system (300) according to any one of claims 9 to 11,
**characterized in that**
the battery system (200) is designed according to any one of claims 1 to 8.

13. Method (100) for charging in a battery system (200) of a vehicle (1), preferably an industrial truck, comprising at least one rechargeable battery (210) of the battery system (200) for supplying energy to at least one vehicle component (2) of the vehicle (1), and at least two electronic switching elements (20) of the battery system (200) each for establishing an electrical connection of the battery (210) to the vehicle component (2),
**comprising the following steps:**
- connecting a charging device (310) to a charging connection point (P1) of the battery system (200), which is electrically connected to the battery (210) electrically independently of the electronic switching elements (20),
- initiating a switch-off of at least one of the electronic switching elements (22) into a switched-off switching state, so that the energy supply of the vehicle component (2) is predominantly reduced and/or completely interrupted,
- initiating a charging process to charge the battery (210) by the charging device (310),
wherein at feast one first and second electronic switching element (21, 22) are provided, wherein
- the first electronic switching element (21) is integrated in a first current path (231) and is brought into a switched-on first switching state, so that a first electrical connection of the battery (210) to the vehicle component (2) and to the charging device (310) is established in the first current path (231),
- the second electronic switching element (22) is integrated in a second current path (232) and is brought into a switched-on second switching state, so that a second electrical connection of the battery (210) to the vehicle component (2) is established in the second current path (232),
wherein the charging connection point (P1) for electrically connecting the battery (210) to the charging device (310) is implemented independently of the second switching state of the second electronic switching element (22).

14. The method (100) according to claim 13,
**characterized in that**
the initiation of the switching-off of the at least one of the electronic switching elements (22) is triggered by the connection of the charging device (310), in particular automatically by an establishment of an electrical contact during the connection by at least one switching component (320) of a charging plug (315).

15. Method (100) according to claim 13 or 14,
**characterized in that**
a battery system (200) according to any one of claims 1 to 8 and/or a charging system (300) according to any one of claims 10 to 12 is operated.

## Revendications

1. Système de batterie (200) pour un véhicule (1), de préférence pour un camion industriel, comprenant :
- au moins une batterie rechargeable (210) pour fournir de l'énergie à au moins un composant du véhicule (2) du véhicule (1),
- au moins deux éléments de commutation électronique (20) permettant chacun d'établir une connexion électrique de la batterie (210) avec le composant du véhicule (2),
dans lequel il est prévu un point de connexion de charge (P1) qui est relié électriquement à la batterie (210) électriquement indépendamment des éléments de commutation électronique (20) et qui est conçu pour la connexion électrique à un dispositif de charge (310), de sorte que la charge de la batterie (210) peut être effectuée par le dispositif de charge (310) lorsqu'au moins un des éléments de commutation électronique (20) est dans un état de commutation désactivé,
dans lequel sont prévus au moins un premier et un deuxième élément de commutation électronique (21, 22), dans lequel
- le premier élément de commutation électronique (21) est intégré dans un premier trajet de courant (231) et peut être amené dans un premier état de commutation activé, de sorte qu'une première connexion électrique de la batterie (210) au composant du véhicule (2) et au dispositif de charge (310) peut être établie dans le premier trajet de courant (231),
- le deuxième élément de commutation électronique (22) est intégré dans un deuxième trajet de courant (232) et peut être amené dans un deuxième état de commutation activé, de sorte qu'une deuxième connexion électrique de la batterie (210) au composant du véhicule (2) peut être établie dans le deuxième trajet de courant (232),
dans lequel le point de connexion de charge (P1) pour la connexion électrique de la batterie (210) au dispositif de charge (310) est réalisé indépendamment du deuxième état de commutation du deuxième élément de commutation électronique (22).

2. Système de batterie (200) selon la revendication 1,
**caractérisé en ce qu'**
un trajet de commande (S), en particulier d'un système de gestion de batterie (400), est reliée électriquement à au moins un des éléments de commutation électronique (22), de sorte que, lorsqu'il est relié au dispositif de charge (310), au moins un des éléments de commutation électronique (22) peut être amené à l'état de commutation désactivé par le trajet de commande (S) afin d'interrompre au moins partiellement la connexion électrique de la batterie (210) avec le composant du véhicule (2).

3. Système de batterie (200) selon la revendication 1 ou 2,
**caractérisé en ce que**
le premier trajet de courant (231) est conçu comme un trajet de courant positif (231) qui est électriquement connecté à un pôle positif (212) de la batterie (210), et le deuxième trajet de courant (232) est conçu comme un trajet de courant négatif (232) qui est électriquement connecté à un pôle négatif (213) de la batterie (210).

4. Système de batterie (200) selon l'une des revendications précédentes,
**caractérisé en ce que**
un système de gestion de batterie (400) est prévu qui est relié électriquement aux éléments de commutation par des trajets de commande (S) respectives, de sorte que
- pour un processus de charge, un premier élément de commutation électronique (21) peut être amené dans un premier état de commutation activé et un deuxième élément de commutation électronique (22) peut être amené dans un deuxième état de commutation désactivé, et
- pour une alimentation en énergie fournie au composant du véhicule (2), le premier élément de commutation électronique (21) peut être amené dans un premier état de commutation activé et le deuxième élément de commutation électronique (22) peut être amené dans un deuxième état de commutation activé, et
- pour une interruption complète au composant du véhicule (2), le premier élément de commutation électronique (21) peut être amené dans un premier état de commutation désactivé et le deuxième élément de commutation électronique (22) peut être amené dans un deuxième état de commutation désactivé.

5. Système de batterie (200) selon l'une des revendications précédentes,
**caractérisé en ce que**
l'un des éléments de commutation électronique (22) et le point de connexion de charge (P1) sont chacun reliés électriquement directement à la batterie (210), en particulier à un pôle négative (213) de la batterie (210).

6. Système de batterie (200) selon l'une des revendications précédentes,
**caractérisé en ce que**
les éléments de commutation électronique (20) sont intégrés en antiparallèle les uns par rapport aux autres dans un circuit pour fournir de l'énergie au composant du véhicule (2), les éléments de commutation électronique (20) étant conçus de préférence chacun comme un commutateur à semi-conducteur, de préférence comme un commutateur à semi-conducteur de puissance, en particulier comme un transistor à effet de champ, et les éléments de commutation électronique (20) étant conçus chacun pour bloquer un flux de courant dans un seul direction de courant dans l'état de commutation désactivé respectivement.

7. Système de batterie (200) selon l'une des revendications précédentes,
**caractérisé en ce que**
le système de batterie (200) pour fournir de l'énergie au composant du véhicule (2) est conçu comme un composant de propulsion électrique, en particulier comme un moteur électrique, du véhicule (1).

8. Système de batterie (200) selon l'une des revendications précédentes,
**caractérisé en ce que**
le point de connexion de charge (P1) est conçu comme un premier point de connexion (P1), un deuxième point de connexion (P2) étant prévu pour relier le composant du véhicule (2) à la batterie (210) par l'intermédiaire d'un deuxième élément de commutation électronique (22) et un troisième point de connexion (P3) étant prévu pour relier le composant du véhicule (2) à la batterie (210) par l'intermédiaire d'un premier élément de commutation électronique (21), le premier point de connexion (P1) étant intégré dans le trajet du courant entre le deuxième élément de commutation électronique (22) et la batterie (210), de sorte qu'une connexion électrique existe entre le premier point de connexion (P1) et la batterie (210) indépendamment d'un deuxième état de commutation du deuxième élément de commutation électronique (22).

9. Système de charge (300) pour charger dans un système de batterie (200) d'un véhicule (1), de préférence d'un camion industriel, comprenant :
- au moins une batterie rechargeable (210) du système de batterie (200) pour fournir de l'énergie à au moins un composant du véhicule (2) du véhicule (1),
- au moins deux éléments de commutation électronique (20) du système de batterie (200) permettant chacun d'établir une connexion électrique de la batterie (210) avec le composant du véhicule (2),
- au moins un dispositif de charge (310) pour transférer l'énergie à la batterie (210),
dans lequel il est prévu un point de connexion de charge (P1) du système de batterie (200) qui est relié électriquement à la batterie (210) électriquement indépendamment des éléments de commutation électronique (20), et
est conçu pour la connexion électrique de manière amovible au dispositif de charge (310), de sorte que le transfert d'énergie vers la batterie par le dispositif de charge (310) peut être effectué lorsqu'au moins un des éléments de commutation électronique (20) est dans un état de commutation désactivé, dans lequel sont prévus au moins un premier et un deuxième élément de commutation électronique (21, 22), dans lequel
- le premier élément de commutation électronique (21) est intégré dans un premier trajet de courant (231) et peut être amené dans un premier état de commutation activé, de sorte qu'une première connexion électrique de la batterie (210) au composant du véhicule (2) et au dispositif de charge (310) peut être établie dans le premier trajet de courant (231),
- le deuxième élément de commutation électronique (22) est intégré dans un deuxième trajet de courant (232) et peut être amené dans un deuxième état de commutation activé, de sorte qu'une deuxième connexion électrique de la batterie (210) au composant du véhicule (2) peut être établie dans le deuxième trajet de courant (232),
dans lequel le point de connexion de charge (P1) pour la connexion électrique de la batterie (210) au dispositif de charge (310) est réalisé indépendamment du deuxième état de commutation du deuxième élément de commutation électronique (22).

10. Système de charge (300) selon la revendication 9,
**caractérisé en ce que**
le dispositif de charge (310) présente une fiche de charge (315), au moins une première connexion (A1) de la fiche de charge (315) pour la charge de la batterie (210) étant reliée électriquement et de manière amovible à au moins le point de connexion de charge (P1), et au moins une deuxième connexion (A2) de la fiche de charge (315) pour la charge de la batterie (210) étant reliée électriquement et de manière amovible à au moins un autre point de connexion (P3).

11. Système de charge (300) selon la revendication 9 ou 10,
**caractérisé en ce que**
le dispositif de charge (310), de préférence une fiche de charge (315) du dispositif de charge (310), présente au moins un composant de commutation électrique (320), en particulier un composant passif et/ou électromécanique, qui est conçu pour déclencher une commutation d'au moins un des éléments de commutation électronique (22) dans un état de commutation désactivé lors d'un contact avec le système de batterie (200), en particulier avec une connexion d'un système de gestion de batterie (400), de sorte que, de préférence, lorsque la fiche de charge (315) est mise en contact pour effectuer la charge, l'alimentation en énergie du composant du véhicule (2), en particulier un entraînement du véhicule (1), est empêchée.

12. Système de charge (300) selon l'une des revendications 9 à 11,
**caractérisé en ce que**
le système de batterie (200) est conçu selon l'une des revendications 1 à 8.

13. Procédé (100) de charge dans un système de batterie (200) d'un véhicule (1), de préférence de préférence d'un camion industriel, comprenant au moins une batterie (210) rechargeable du système de batterie (200) pour fournir de l'énergie à au moins un composant du véhicule (2) du véhicule (1) et au moins deux éléments de commutation électronique (20) du système de batterie (200) respectivement pour établir une connexion électrique de la batterie (210) avec le composant du véhicule (2),
**comprenant les étapes suivantes** :
- la connexion d'un dispositif de charge (310) à un point de connexion de charge (P1) du système de batterie (200), qui est relié électriquement à la batterie (210) indépendamment des éléments de commutation électronique (20),
- le déclenchement d'une désactivation d'au moins un des éléments de commutation électronique (22) dans un état de commutation désactivé, de sorte que l'alimentation en énergie du composant du véhicule (2) soit principalement réduite et/ou complètement interrompue,
- le déclenchement d'un processus de charge pour charger la batterie (210) par le dispositif de charge (310),
dans lequel sont prévus au moins un premier et un deuxième élément de commutation électronique (21, 22), dans lequel
- le premier élément de commutation électronique (21) est intégré dans un premier trajet de courant (231) et est amené dans un premier état de commutation activé, de sorte qu'une première connexion électrique de la batterie (210) au composant du véhicule (2) et au dispositif de charge (310) est établie dans le premier trajet de courant (231),
- le deuxième élément de commutation électronique (22) est intégré dans un deuxième trajet de courant (232) et est amené dans un deuxième état de commutation activé, de sorte qu'une deuxième connexion électrique de la batterie (210) au composant du véhicule (2) est établie dans le deuxième trajet de courant (232),
dans lequel le point de connexion de charge (P1) pour la connexion électrique de la batterie (210) au dispositif de charge (310) est réalisé indépendamment du deuxième état de commutation du deuxième élément de commutation électronique (22).

14. Procédé (100) selon la revendication 13,
**caractérisé en ce que**
le déclenchement de la désactivation d'au moins un des éléments de commutation électronique (22) est déclenché par la connexion du dispositif de charge (310), en particulier automatiquement par l'établissement d'un contact électrique lors de la connexion par au moins un composant de commutation (320) d'une fiche de charge (315).

15. Procédé (100) selon la revendication 13 ou 14,
**caractérisé en ce qu'**
un système de batterie (200) selon l'une des revendications 1 à 8 et/ou un système de charge (300) selon l'une des revendications 10 à 12 est utilisé.
